# EUROPEAN PATENT APPLICATION

(11) **EP 4 640 513 A1**
(43) Date of publication of application: **29.10.2025**
(21) Application number: 23907064.2
(22) Date of filing: 19.12.2023
(51) Int. Cl.: B60W 50/04, B60W 40/00, B60W 50/14, F01N 3/20, F02D 35/00, F02D 45/00, G05B 23/02

(54) **METHOD FOR PRODUCING STATE RECOGNITION DEVICE AND STATE RECOGNITION DEVICE**

(30) Priority: 19.12.2022 WO PCT/JP2022/046657; 11.04.2023 JP 2023063949
(71) Applicant: Yamaha Hatsudoki Kabushiki Kaisha, Iwata-shi, Shizuoka 438-8501 (JP)
(72) Inventor: KUMAGAI, Kenichi, Iwata-shi, Shizuoka 438-8501 (JP); SHIMIZU, Yuta, Iwata-shi, Shizuoka 438-8501 (JP)
(74) Representative: Zimmermann, Tankred Klaus
(86) International application number: PCT/JP2023/045571
(87) International publication number: WO 2024/135704

(57) **Abstract**

A method for producing a state recognition device configured to output an identification period identifying a state of a vehicle or a state of part of the vehicle includes: a unit space calculation step of calculating a unit space by means of a Mahalanobis-Taguchi, MT, method, based on sets of data per unit period of a continuous vibration signal in which a signal disturbance is occurring, which are less susceptible to a variation including both increase and decrease and are obtained in an identification period; and a Mahalanobis' distance output unit generation step of generating a Mahalanobis' distance output unit based on the calculated unit space, in the identification period that is as long as or longer than a half of one cycle when a cycle of vibration of the continuous vibration signal is undisturbed and is arranged so that one driving cycle includes plural identification periods, the data of the continuous vibration signal being data when the signal disturbance, which is at least one of a change of the center of vibration, a change of amplitude of vibration, or disturbance of the cycle of vibration, is occurring in the continuous vibration signal due to a change of at least one of the driving environment or the driving state of the vehicle.

## Description

### [Technical Field]

The present teaching relates to a method for producing a state recognition device which is configured to output a signal by which a state of a vehicle or a state of part of the vehicle is identified, and also relates to a state recognition device which is configured to output a signal by which a state of a vehicle or a state of part of the vehicle is identified.

### [Background Art]

A state recognition device configured to output a signal by which a state of a vehicle or a state of part of the vehicle is identified based on a signal output from a sensor of the vehicle whose driving environment and driving state are variable has been known. The state recognition device outputs a signal by which a state of a vehicle or a state of part of the vehicle is identified, in order to use the signal for controlling the vehicle, for providing a notification to a user, or for collecting data regarding the vehicle.

For example, Patent Literature 1 discloses a state recognition device configured to output a signal by which a deterioration state of a catalyst is identified. The state recognition device of Patent Literature 1 outputs a signal by which the deterioration state of the catalyst is identified, based on a signal of a downstream oxygen concentration sensor that is provided downstream of the catalyst in a flow direction of exhaust gas exhausted from an engine. The state recognition device of Patent Literature 1 outputs a signal by which the deterioration state of the catalyst is identified, based on data regarding the responsiveness of the downstream oxygen concentration sensor, when control of a fuel amount for diagnosing the deterioration state of the catalyst, which is different from control of a fuel amount when the deterioration state of the catalyst is not diagnosed, is being performed.

For example, Patent Literature 2 discloses a state recognition device configured to output a signal by which misfire of the engine is identified. The state recognition device of Patent Literature 2 outputs a signal by which misfire of the engine is identified based on an engine rotation speed sensor, by analyzing a signal of the engine rotation speed sensor in detail.

### [Citation List]

### [Patent Literatures]

[Patent Literature 1] International Publication No.2021/182584
[Patent Literature 2] International Publication No. 2016/194953

### [Summary]

### [Technical Problem]

When a signal by which the deterioration state of a catalyst is identified is output as in the state recognition device of Patent Literature 1, driving conditions in which the diagnosis is possible are limited. Furthermore, when a signal by which misfire of the engine is identified is output as in the state recognition device of Patent Literature 2, the state recognition device is required to perform a complicated calculation process. On this account, the state recognition device needs to have high-performance hardware resources such as a high-performance processor and a large-capacity memory. The degree of freedom in designing the hardware resources of the state recognition device is therefore low.

An object of the present teaching is to provide a method for producing a state recognition device by which a state recognition device that identifies whether the state of a vehicle or part of the vehicle is a predetermined state or a state other than the predetermined state is easily produced, and to provide a state recognition device which is able to increase the frequency of identification or improve the degree of freedom in designing hardware resources and is configured to identify whether the state of a vehicle or part of the vehicle is a predetermined state or the state other than the predetermined state.

### [Solution to Problem]

A method for producing a state recognition device of an embodiment of the present teaching is arranged as described below.

A method for producing a state recognition device which is configured to output an identification signal for controlling the vehicle, for providing a notification to a user, or for collecting data regarding the vehicle, the identification signal identifying whether a state of a vehicle or a state of part of the vehicle is a predetermined state or a state other than the predetermined state, based on either an output signal of a sensor mounted on the vehicle whose driving environment and driving state vary or a predetermined signal generated from the output signal of the sensor, the output signal of the sensor or the predetermined signal being a continuous vibration signal that vibrates at least in a steady state where at least the driving environment and the driving state of the vehicle stay unchanged, and the method comprising:
a unit space calculation step of calculating a unit space, which functions as a reference for identifying whether the state of the vehicle or the state of part of the vehicle is the predetermined state or the state other than the predetermined state, by means of a Mahalanobis-Taguchi, MT, method, based on sets of data per unit period of a continuous vibration signal in which signal disturbance is occurring, which are less susceptible to a variation including both increase and decrease and are obtained in an identification period, the identification period being as long as or longer than a half of one cycle when a cycle of vibration of the continuous vibration signal is undisturbed and is arranged so that one driving cycle includes plural identification periods, the data of the continuous vibration signal being data when the signal disturbance, which is at least one of a change of the center of vibration, a change of amplitude of vibration, or disturbance of the cycle of vibration, is occurring in the continuous vibration signal due to a change of at least one of the driving environment or the driving state of the vehicle; and
a Mahalanobis' distance output unit generation step of generating, based on the calculated unit space, a Mahalanobis' distance output unit which is included in the state recognition device and is configured to output a Mahalanobis' distance.

According to this arrangement, in the state recognition device configured to output an identification signal identifying whether the state of the vehicle or the state of part of the vehicle is the predetermined state or the state other than the predetermined state, the unit space used as a reference for identifying whether the state of the vehicle or the state of part of the vehicle is the predetermined state or the state other than the predetermined state is calculated by using the MT method (Mahalanobis-Taguchi method), based on the data per unit period of the continuous vibration signal in the identification period in which the signal disturbance is occurring. The Mahalanobis' distance output unit which is included in the state recognition device and is configured to output the Mahalanobis' distance is then generated based on the calculated unit space.

The MT method is a method encompassed in the MT system. Apart from the MT method, methods encompassed in the MT system are an MTA method, a two-sided T method, and an RT method. Among these methods, the MT method is more suitable than the MTA method, the two-sided T method, and the RT method, when a state recognition device configured to output an identification signal is produced, which identifies whether the state of a vehicle or the state of part of the vehicle is the predetermined state or the state other than the predetermined state.

To be more specific, while a signal level is required to generate a Mahalanobis' distance output unit based on a unit space calculated by using the MTA method, no signal level is required to generate a Mahalanobis' distance output unit based on a unit space calculated by using the MT method. In this regard, a signal in the signal level indicates a physical state quantity of a target system, and the signal level indicates the number of parameters set for identifying a state.

Furthermore, a calculation for obtaining a unit space is more complicated in the MTA method than in the MT method. Furthermore, a verification of whether a calculated unit space is suitable is more complicated in the MTA method than in the MT method.

For example, when a unit space is calculated, a characteristic amount (feature quantity) for calculating the unit space is selected. According to the MT method, an inverse matrix is used for calculating a unit space. The unit space is calculated so that the Mahalanobis' distance of the unit space is 1. On account of the use of an inverse matrix for calculating a unit space, there are computational constraints in calculation of a unit space in the MT method. The computational constraints in calculation of a unit space in the MT method are a constraint that a unit space cannot be calculated when a characteristic amount in which the standard deviation is 0 is included, a constraint that a unit space cannot be calculated when the number of unit space samples is smaller than the number of characteristic amounts, and a constraint that a unit space cannot be calculated when there is multicolinearity between characteristic amounts. On this account, when a unit space is calculated by using the MT method, the calculation cannot be done due to the computational constraints described above, when selected characteristic amounts include a characteristic amount in which the standard deviation is 0 or characteristic amounts with multicolinearity therebetween. On this account, it is possible to grasp that the selected characteristic amount was inappropriate and to select a characteristic amount again.

In this regard, in the MTA method, an adjugate matrix is used for calculating a unit space and a Mahalanobis' distance (adjoint Mahalanobis' distance) obtained at the time of calculating the unit space may not be 1. In the MTA method, on account of the use of the adjugate matrix for calculating the unit space, computational constraints in calculation of the unit space are relaxed as compared to the MT method. On this account, when a unit space is calculated by using the MTA method, the calculation of the unit space may be successfully done even when selected characteristic amounts include a characteristic amount in which the standard deviation is 0 or characteristic amounts with multicolinearity therebetween. In such a case, until the step of verifying whether it is possible to sufficiently identify whether the state of the vehicle or part of the vehicle is the predetermined state or the state other than the predetermined state based on a unit space after the calculation of the unit space, it may be impossible to grasp that a selected characteristic amount was not suitable.

While a signal level is required to generate a Mahalanobis' distance output unit based on a unit space calculated by using the two-sided T method, no signal level is required to generate a Mahalanobis' distance output unit based on a unit space calculated by using the MT method. The two-sided T method is a method in which an average state of two states is set as a unit space and which one of the two states is the current state is determined based on the direction away from the unit space. In this regard, in the state recognition device of the arrangement of the description, what is identified is whether the state of the vehicle or the state of part of the vehicle is the predetermined state or the state other than the predetermined state, and hence it is unnecessary to identify in which one of the two directions the current state is away from the unit space. On this account, when producing a state recognition device configured to output an identification signal, which identifies whether the state of the vehicle or the state of part of the vehicle is the predetermined state or the state other than the predetermined state, it is not unnecessary to complicate the Mahalanobis' distance output unit by calculating a unit space intentionally by means of the two-sided T method and generating the Mahalanobis' distance output unit based on the calculated unit space.

Calculation for obtaining a unit space is more complicated in the RT method than in the MT method.

Furthermore, a verification of whether a calculated unit space is suitable is more complicated in the RT method than in the MT method for the same reason as the MTA method.

The RT method is a method suitable for setting plural unit spaces and determining which one of at least three states the current state is, and the number of unit spaces to be set may be only one. In this regard, in the state recognition device of the description, what is required is only to identify whether the state of the vehicle or the state of part of the vehicle is the predetermined state or the state other than the predetermined state. On this account, when producing a state recognition device configured to output an identification signal, which identifies whether the state of the vehicle or the state of part of the vehicle is the predetermined state or the state other than the predetermined state, it is not unnecessary to complicate the Mahalanobis' distance output unit by calculating a unit space intentionally by means of the RT method by which plural unit spaces are suitably set but in which calculation of a unit space is complicated and verification of whether a calculated unit space is suitable or not is complicated, and generating the Mahalanobis' distance output unit based on the calculated unit space.

Because of the above, the MT method is more suitable than the MTA method, the two-sided T method, and the RT method, when a state recognition device configured to output an identification signal is produced, which identifies whether the state of a vehicle or the state of part of the vehicle is the predetermined state or the state other than the predetermined state.

The method for producing a state recognition device of the embodiment of the present teaching may have the following arrangement.

In the Mahalanobis' distance output unit generation step, the Mahalanobis' distance output unit is produced without using a signal level.

According to this arrangement, because the Mahalanobis' distance output unit is generated by calculating the unit space by means of the MT method without using a signal level, it is easy to produce a state recognition device configured to identify whether the state of the vehicle or the state of part of the vehicle is the predetermined state or the state other than the predetermined state, as compared to a case where a Mahalanobis' distance output unit is generated by calculating a unit space by means of the MTA method or the two-sided T method and by using a signal level.

The method for producing a state recognition device of the embodiment of the present teaching may have the following arrangement.

In the unit space calculation step, a single unit space is calculated.

In the state recognition device configured to output an identification signal, which identifies whether the state of a vehicle or the state of part of the vehicle is the predetermined state or the state other than the predetermined state, what is required is to set a single unit space and generate a Mahalanobis' distance output unit. On this account, as compared to a case where a unit space is calculated by means of the RT method which is suitable for setting plural unit spaces but in which calculation of a unit space is more complicated than the MT method and verification of whether a calculated unit space is suitable or not is more complicated than the MT method, it is possible to easily produce a state recognition device configured to output an identification signal. which identifies whether the state of the vehicle or the state of part of the vehicle is the predetermined state or the state other than the predetermined state.

The method for producing a state recognition device of the embodiment of the present teaching may have the following arrangement.

In the unit space calculation step, in the identification period the unit space is calculated by using the MT method based on the data per unit period of the continuous vibration signal in which the signal disturbance occurs and data of a signal output from at least one different sensor mounted on the vehicle.

According to this arrangement, because the unit space is calculated by using the MT method based on the data of the continuous vibration signal in which the signal disturbance occurs and the data of the output signal of the different sensor, it is possible to calculate a more suitable unit space as compared to a case where a unit space is calculated based solely on the data of the continuous vibration signal in which signal disturbance occurs.

The method for producing a state recognition device of the embodiment of the present teaching may have the following arrangement.

In the unit space calculation step, the unit space is calculated by using the MT method based on either data of the continuous vibration signal when the state of the vehicle or the state of part of the vehicle is the predetermined state or data of the continuous vibration signal when the state of the vehicle or the state of part of the vehicle is the state other than the predetermined state.

According to this arrangement, the unit space is calculated by using the MT method based on either data of the continuous vibration signal when the state of the vehicle or the state of part of the vehicle is the predetermined state or data of the continuous vibration signal when the state of the vehicle or the state of part of the vehicle is the state other than the predetermined state, and the Mahalanobis' distance output unit is generated based on the calculated unit space.

The method for producing a state recognition device of the embodiment of the present teaching may have the following arrangement.

The vehicle includes an engine and a catalyst configured to purify exhaust gas exhausted from the engine, and in the unit space calculation step, the unit space is calculated by using the MT method, as a reference for identifying whether the catalyst is normal or deteriorated.

According to this arrangement, it is possible to produce the state recognition device configured to output the identification signal, which identifies whether the catalyst is normal or deteriorated, in such a way that the unit space used as a reference for identifying whether the catalyst is normal or deteriorated is calculated by using the MT method based on data per unit period of the continuous vibration signal in which signal disturbance occurs in the identification period, and the Mahalanobis' distance output unit is generated based on the calculated unit space.

The method for producing a state recognition device of the embodiment of the present teaching may have the following arrangement.

The vehicle includes an engine, and in the unit space calculation step, the unit space is calculated by using the MT method, as a reference for identifying whether a misfire occurs in the engine or the engine runs without a misfire.

According to this arrangement, it is possible to produce the state recognition device configured to output the identification signal, which identifies whether a misfire occurs in the engine or the engine runs without a misfire, in such a way that the unit space used as a reference for identifying whether misfire occurs in the engine or the engine runs without misfire is calculated by using the MT method based on data per unit period of the continuous vibration signal in which signal disturbance occurs in the identification period, and the Mahalanobis' distance output unit is generated based on the calculated unit space.

A state recognition device of an embodiment of the present teaching has the following features.

A state recognition device which is configured to output an identification signal for controlling the vehicle, for providing a notification to a user, or for collecting data regarding the vehicle, the identification signal identifying whether a state of a vehicle or a state of part of the vehicle is a predetermined state or a state other than the predetermined state based on either an output signal of a sensor mounted on the vehicle whose driving environment and driving state vary or a predetermined signal generated from the output signal of the sensor, the output signal of the sensor or the predetermined signal being a continuous vibration signal that vibrates at least in a steady state where at least the driving environment and the driving state of the vehicle stay unchanged, and the state recognition device comprising a processor which is configured to execute at least an identification signal output process of (i)outputting a Mahalanobis' distance on which a characteristic amount regarding a change of the continuous vibration signal in which a signal disturbance is occurring is reflected, by means of a Mahalanobis' distance output unit generated based on a unit space calculated by means of a Mahalanobis-Taguchi, MT, method, based on sets of data per unit period of the continuous vibration signal in which the signal disturbance is occurring, which are less susceptible to a variation including both increase and decrease and are obtained in an identification period, the identification period being as long as or longer than a half of one cycle when a cycle of vibration of the continuous vibration signal is undisturbed and is arranged so that one driving cycle includes plural identification periods, and (ii) outputting the identification signal identifying whether the state of the vehicle or the state of part of the vehicle is the predetermined state or the state other than the predetermine state based on the Mahalanobis' distance, when the signal disturbance, which is at least one of a change of the center of vibration, a change of amplitude of vibration, or disturbance of the cycle of vibration, is occurring in the continuous vibration signal due to a change of at least one of the driving environment or the driving state of the vehicle.

According to this arrangement, the state recognition device outputs a Mahalanobis' distance on which a characteristic amount regarding a change of the continuous vibration signal, in which the signal disturbance occurs, is reflected, by using the Mahalanobis' distance output unit generated based on a unit space calculated by means of the MT method, based on the sets of data per unit period of the continuous vibration signal in which the signal disturbance occurs, which are obtained in the identification period. Based on this Mahalanobis' distance, an identification signal is output to identify the state of the vehicle or the state of part of the vehicle. The identification period is as long as or longer than a half of one cycle of the continuous vibration signal when the cycle of vibration of the continuous vibration signal is undisturbed, and is a relatively long period arranged so that one driving cycle includes plural identification periods. On this account, even if signal disturbance is occurring in the continuous vibration signal, a characteristic by which the state of the vehicle or the state of part of the vehicle can be identified appears in the continuous vibration signal in the identification period that is relatively long. When signal disturbance is occurring in the continuous vibration signal, it is possible to output the identification signal by which the state of the vehicle or the state of part of the vehicle is identified can be output based on a Mahalanobis' distance on which a characteristic amount regarding a change of the continuous vibration signal in which the signal disturbance occurs is reflected, based on sets of data per unit period obtained in the identification period. In order to identify the state of the vehicle or the state of part of the vehicle based on the continuous vibration signal in which signal disturbance occurs, it is possible to increase the frequency of outputting the identification signal.

According to this arrangement, based on the sets of data per unit period of the continuous vibration signal in which the signal disturbance occurs in the identification period, which are obtained in the identification period, a Mahalanobis' distance on which a characteristic amount regarding a change of the continuous vibration signal in which the signal disturbance occurs is reflected is output by using the Mahalanobis' distance output unit generated based on a unit space calculated by means of the MT method, and the identification signal by which the state of the vehicle or the state of part of the vehicle is identified is output based on the Mahalanobis' distance. Due to this, it is unnecessary to perform a complicated calculation for analyzing the continuous vibration signal in a detained manner, with the result that the identification signal can be easily generated. This makes it possible to increase the degree of freedom in designing the hardware resources of the state recognition device. Furthermore, according to the arrangement above, because, as described above, the identification signal can be generated without requiring a complicated calculation for performing detailed analysis of the continuous vibration signal, it is possible to identify whether the state of the vehicle or the state of part of the vehicle is the predetermined state in real time.

The state recognition device of the embodiment of the present teaching may be structured as described below.

In the identification signal output process, the processor outputs a Mahalanobis' distance, on which a characteristic amount regarding a change of the continuous vibration signal in which the signal disturbance is occurring is reflected, by means of a Mahalanobis' distance output unit generated based on the unit space calculated by means of the MT method, based on data per unit period of the continuous vibration signal in which the signal disturbance is occurring and data of a signal output from at least one different sensor mounted on the vehicle in the identification period, and outputs the identification signal identifying whether the state of the vehicle or the state of part of the vehicle is the predetermined state or the state other than the predetermined state based on the Mahalanobis' distance, when the signal disturbance is occurring in the continuous vibration signal due to a change of at least one of the driving environment or the driving state of the vehicle.

According to this arrangement, based on the data of the continuous vibration signal in which signal disturbance occurs and the data of the output signal of the different sensor, the Mahalanobis' distance is output by using the Mahalanobis' distance output unit generated based on the unit space calculated by using the MT method, and the identification signal, which identifies whether the state of the vehicle or the state of part of the vehicle is the predetermined state or the state other than the predetermined state, is output based on the Mahalanobis' distance. It is therefore possible to improve the accuracy of identification by the identification signal. It is possible to suppress the increase in the number of processes as compared to a case where the accuracy of identification is improved by using an output signal of only one sensor. It is therefore possible to improve the degree of freedom in designing the hardware resources while improving the accuracy of identification.

The state recognition device of the embodiment of the present teaching may be structured as described below.

In the identification signal output process, the processor outputs a Mahalanobis' distance by using a Mahalanobis' distance output unit that is generated based on the unit space calculated by using the MT method either based on data of the continuous vibration signal when the state of the vehicle or the state of part of the vehicle is the predetermined state or based on data of the continuous vibration signal when the state of the vehicle or the state of part of the vehicle is the state other than the predetermined state.

According to this arrangement, as the Mahalanobis' distance is output by using a Mahalanobis' distance output unit that is generated either based on the unit space calculated by using the MT method based on data of the continuous vibration signal when the state of the vehicle or the state of part of the vehicle is the predetermined state or based on data of the continuous vibration signal when the state of the vehicle or the state of part of the vehicle is the state other than the predetermined state, it is possible to output the identification signal identifying whether the state of the vehicle or the state of part of the vehicle is the predetermined state or the state other than the predetermined state is identified.

The state recognition device of the embodiment of the present teaching may be structured as described below.

The vehicle includes an engine and a catalyst configured to purify exhaust gas exhausted from the engine, and the identification signal includes a signal for identifying whether the catalyst is normal or deteriorated.

According to this arrangement, based on the data per unit period of the continuous vibration signal in which signal disturbance occurs in the identification period, a Mahalanobis' distance in which a characteristic amount regarding a change of the continuous vibration signal in which the signal disturbance occurs is reflected is output by using a Mahalanobis' distance output unit generated based on a unit space calculated by using the MT method, and a signal for identifying whether a catalyst is normal or deteriorated is output as an identification signal, which identifies whether the state of the vehicle or the state of part of the vehicle is the predetermined state or the state other than the predetermined state based on the Mahalanobis' distance.

The state recognition device of the embodiment of the present teaching may be structured as described below.

The vehicle includes an engine, and the identification signal includes a signal identifying whether a misfire occurs in the engine or the engine runs without a misfire.

According to this arrangement, based on the data per unit period of the continuous vibration signal in which signal disturbance occurs in the identification period, a Mahalanobis' distance in which a characteristic amount regarding a change of the continuous vibration signal in which the signal disturbance occurs is reflected is output by using a Mahalanobis' distance output unit generated based on a unit space calculated by using the MT method, and a signal identifying whether a misfire occurs in the engine or the engine runs without a misfire is output as an identification signal, by which identifies whether the state of the vehicle or the state of part of the vehicle is the predetermined state or the state other than the predetermined state based on the Mahalanobis' distance.

In the present teaching and embodiments, a vehicle may or may not include a wheel. The vehicle may include a straddled vehicle. The straddled vehicle indicates all types of vehicles on which a driver rides in a manner of straddling a saddle. For example, the straddled vehicle includes a motorcycle, a motor tricycle, a four-wheeled buggy (ATV: All Terrain Vehicle), a snowmobile, a personal watercraft, and the like. The vehicle may be, for example, an automobile, a ship, or a flying object such as a drone. In the present teaching and embodiments, the vehicle includes a power source which is configured to generate power for running. The power source may be an engine, an electric motor, or both an electric motor and an engine. The type of the engine is not particularly limited. In the present teaching and embodiments, one driving cycle is the time length from the start of a power source of a vehicle to the stop of the power source.

In the present teaching and embodiments, when an output signal of a sensor or a predetermined signal is a continuous vibration signal that vibrates at least in a steady state, the output signal of the sensor may be the continuous vibration signal at least in the steady state. Alternatively, when an output signal of a sensor or a predetermined signal is a continuous vibration signal that vibrates at least in a steady state, the output signal of the sensor may not be the continuous vibration signal and the predetermined signal may be the continuous vibration signal at least in the steady state. In this regard, the output signal of the sensor or the predetermined signal may not always be the continuous vibration signal in the steady state. Vibration indicates that a signal value (voltage value or a current value) repeatedly increases and decreases. In the present teaching and embodiments, a state in which the center of vibration of a continuous vibration signal varies indicates a state in which, in the waveform of the continuous vibration signal, the highest part and the lowest part vary in the same tendencies over time. A person with ordinary skill in the art is able to recognize whether the center of vibration varies, even if he/she cannot clearly specify the center of the vibration. In the present teaching and embodiments, a state in which the amplitude of vibration of a continuous vibration signal varies indicates a state in which the amplitude of the vibration of the continuous vibration signal is not constant. In the present teaching and embodiments, a state in which the cycle of vibration of a continuous vibration signal is disturbed indicates a state in which the vibration of the continuous vibration signal is irregular.

In the present teaching and embodiments, the driving environment of a vehicle is the environment around the vehicle. In the present teaching and embodiments, the driving state of a vehicle is a state related to the vehicle. In the present teaching and embodiments, a variation of the driving environment, which is at least one of a variation of the center of vibration of a continuous vibration signal, a variation of the amplitude of vibration, or disturbance of the cycle of vibration and which is a cause of signal disturbance, encompasses, for example, a variation in inclination of a road surface on which a vehicle runs, the existence of irregularity on the road surface on which the vehicle runs, a change in tail wind, or a change in head wind. In the present teaching and embodiments, a change in the driving state which is a cause of signal disturbance of a continuous vibration signal encompasses, for example, a change in an air amount supplied to a combustion chamber of an engine of a vehicle, a change in engine rotation speed of the engine of the vehicle, and a change in transmission ratio of a transmission of the vehicle.

In the present teaching and embodiments, sets of data per unit period of a continuous vibration signal in an identification period, which are less susceptible to variations including both increase and decrease and are acquired during the identification period, are sets of data per unit period, which are acquired in each unit period that is so short not to be susceptible to an influence of both increase and decrease due to vibration of the continuous vibration signal and are acquired during the identification period. The variation including both increase and decrease is a variation including both increase and decrease in one vibration of the continuous vibration signal. An expression "less susceptible to a variation including both increase and decrease" indicates "less susceptible to a variation including one increase and one decrease". When the unit period is long and both an increase and a decrease of the continuous vibration signal occur in the unit period, there is a case where an amount of change of the continuous vibration signal per unit period is zero. The data per such a long unit period is influenced by a variation including both increase and decrease. In the present teaching and embodiments, a length that is equal to or longer than a half of the cycle of vibration of the continuous vibration signal when the cycle is undisturbed in the continuous vibration signal may be a length that is equal to or longer than a half of the cycle of vibration of the continuous vibration signal when the center of vibration of the continuous vibration signal varies.

In the present teaching and embodiments, based on the data of a continuous vibration signal per unit period during an identification period while signal disturbance is occurring in the continuous vibration signal, a unit space is calculated by means of the MT method, and a Mahalanobis' distance output unit is generated based on the calculated unit space. When signal disturbance is occurring in the continuous vibration signal, based on the data per unit period of the continuous vibration signal during the identification period, a Mahalanobis' distance, on which a characteristic amount regarding a change of the continuous vibration signal in which the signal disturbance occurs is reflected, is output by using the Mahalanobis' distance output unit generated based on a unit space calculated by means of the MT method.

Based on this Mahalanobis' distance, an identification signal is output to identify the state of the vehicle or the state of part of the vehicle. The Mahalanobis' distance indicates the distance from a unit space. The closer the Mahalanobis' distance is to 1, the closer the data, based on which the Mahalanobis' distance is obtained, is to the data group based on which the unit space is calculated.

The identification signal may be a signal directly indicating the Mahalanobis' distance, or may be a signal that is based on the Mahalanobis' distance but does not directly indicate the Mahalanobis' distance.

When the identification signal is a signal directly indicating the Mahalanobis' distance, the identification signal may be, for example, a signal indicating a squared value of the Mahalanobis' distance. In the field of quality engineering in which the Mahalanobis' distance is used, a squared value of the Mahalanobis' distance may be termed a Mahalanobis' distance.

When the identification signal is not a signal directly indicating the Mahalanobis' distance, the identification signal may include, for example, a signal that is based on the Mahalanobis' distance and indicates to what extent the state of the vehicle or the state of part of the vehicle is close to a predetermined state. Alternatively, the identification signal may include, for example, a signal that is based on the Mahalanobis' distance and indicates to what extent the state of the vehicle or the state of part of the vehicle is close to a state that is the state other than a predetermined state. When outputting the identification signal, the processor may output an identification signal indicating a result of identification of the state of the vehicle or the state of part of the vehicle based on the Mahalanobis' distance. This result of identification of the state of the vehicle or the state of part of the vehicle may be, for example, an identification result (diagnosis result) of whether the state of the vehicle or the state of part of the vehicle is the predetermined state or the state other than the predetermined state.

In the present teaching and embodiments, the identification period is arranged so that one driving cycle includes plural identification periods. In this connection, the state recognition device may output the Mahalanobis' distance based on data per unit period of the continuous vibration signal in one identification period and output the identification signal based on the Mahalanobis' distance, or may output the Mahalanobis' distance based on the data per unit period of the continuous vibration signal in two or more identification periods and output the identification signal based on the Mahalanobis' distance.

In the present teaching and embodiments, a Mahalanobis' distance is calculated based on sets of data per unit period obtained in an identification period, by using a Mahalanobis' distance output unit generated based on a unit space calculated by means of the MT method. On the Mahalanobis' distance, plural types of characteristic amounts regarding a change of the continuous vibration signal in which signal disturbance occurs in the identification period may be reflected. The signal on which plural types of characteristic amounts regarding a change of the continuous vibration signal in which signal disturbance occurs in the identification period is reflected may be a signal indicating a single value on which plural types of characteristic amounts regarding a change of the continuous vibration signal in which signal disturbance occurs in the identification period are reflected. The plural types of characteristic amounts regarding a change of the continuous vibration signal in which signal disturbance occurs in the identification period may include at least one of the average, the median, the mode, the maximum, the minimum, the accumulation, the variance, or the standard deviation of an amount of change of the continuous vibration signal in which the signal disturbance occurs, which is acquired in each unit period during the identification period. The plural types of characteristic amounts regarding a change of the continuous vibration signal in which signal disturbance occurs in the identification period may include a frequency of how often an amount of change of the continuous vibration signal in which the signal disturbance occurs, which is acquired in each unit period during the identification period, is at a specific value (e.g., the mode). The amount of change obtained in each unit period may be a differential value in each unit period or an amount of change per unit period. The plural types of characteristic amounts regarding a change of the continuous vibration signal in which signal disturbance occurs in the identification period may include at least one of the average, the median, the mode, the maximum, the minimum, the accumulation, the variance, or the standard deviation of a value of the continuous vibration signal in which the signal disturbance occurs, in each unit period during the identification period. The plural types of characteristic amounts regarding a change of the continuous vibration signal in which signal disturbance occurs in the identification period may include a difference between the maximum value in each unit period in the identification period and the minimum value in each unit period in the identification period. The plural types of characteristic amounts regarding a change of the continuous vibration signal in which signal disturbance occurs in the identification period may include a frequency of how often a value per unit period of the continuous vibration signal in which the signal disturbance occurs in the identification period is at a specific value (e.g., the mode). The plural types of characteristic amounts regarding a change of the continuous vibration signal in which signal disturbance occurs in the identification period may include at least one of the skewness, the kurtosis, the number of reversals, the trajectory length, the integral value, the cycle, the frequency, or the amplitude of the continuous vibration signal in which the signal disturbance occurs, which is calculated from the value of the continuous vibration signal in which the signal disturbance occurs, in each unit period in the identification period. The plural types of characteristic amounts regarding a change of the continuous vibration signal in which signal disturbance occurs in the identification period may include at least one of the ratio of the number of reversals, the ratio of the trajectory length, the ratio of the integral value, or the ratio of the frequency of the continuous vibration signal in which the signal disturbance occurs, which is calculated from the value of the continuous vibration signal in which the signal disturbance occurs, in each unit period in the identification period. The ratio of the trajectory length may be, for example, the ratio of the trajectory length when the continuous vibration signal in which signal disturbance occurs is in a specific state to the trajectory length of the continuous vibration signal in the entire identification period in which the signal disturbance occurs.

The plural types of characteristic amounts regarding a change of the continuous vibration signal in which signal disturbance occurs may include the ratio of the time length in which the continuous vibration signal in which signal disturbance occurs is in a specific state to the time length of the identification period, which is calculated from a value per unit period of the continuous vibration signal in which signal disturbance occurs in the identification period.

However, due to computational constraint in the MT method, the characteristic amount regarding a change of the continuous vibration signal in which signal disturbance occurs must be a characteristic amount whose standard deviation is not 0. Furthermore, due to computational constraint in the MT method, the plural types of characteristic amounts regarding a change of the continuous vibration signal in which signal disturbance occurs must be plural types of characteristic amounts between which no multicolinearity exists. For example, there is multicolinearity between the average, the integral value, and the trajectory length of an amount of change of the continuous vibration signal in which signal disturbance occurs, which is obtained in each unit period in the identification period. Furthermore, for example, there is multicolinearity between the variance and the standard deviation of an amount of change of the continuous vibration signal in which signal disturbance occurs, which is obtained in each unit period in the identification period.

In the present teaching and embodiments, the processor of the state recognition device outputs an identification signal for controlling the vehicle, for providing a notification to a user, or for collecting data regarding the vehicle. Irrespective of the application of the identification signal, the state recognition device may be mounted on the vehicle or may be able to communicate with a device mounted on the vehicle, instead of being mounted on the vehicle. In either case, the state recognition device obtains an output signal of a sensor mounted on the vehicle or data of a predetermined signal generated from the output signal of the sensor. When the state recognition device obtains data of the output signal of the sensor mounted on the vehicle, the state recognition device may output a predetermined signal based on the output signal of the sensor. In the present teaching and embodiments, to output the identification signal may indicate to output the identification signal to a device outside the state recognition device, or to output the identification signal to a processor in the state recognition device, which is identical with or different from a processor that executes an identification signal output process. The device outside the state recognition device may be mounted on the vehicle or may not be mounted on the vehicle. When the identification signal is output for the purpose of notification for a user, a notification device that performs notification for the user based on the identification signal may be mounted on the vehicle or may not be mounted on the vehicle. The user may be, for example, a driver of the vehicle or maintenance personnel of the vehicle. When the identification signal is output to collect data regarding the vehicle, the identification signal may be sent to a data collection system configured to collect data regarding the vehicle, for example.

In the present teaching and embodiments, the state recognition device includes a processor and a storage device. The state recognition device may be, for example, an ECU (Electronic Control Unit). The processor includes a microcontroller, a central processing unit (CPU), a microprocessor, a multiprocessor, an application specific integrated circuit (ASIC), a programmable logic circuit (PLC), a field programmable gate array (FPGA), and any other circuit capable of executing the process described herein. The storage device is a device for storing data and programs. The storage device includes a non-transitory recording medium storing a program instruction for causing a controller to execute a process of outputting an identification signal. The storage device encompasses semiconductor memories such as a resistor and a cash memory, a main memory (a main storage or a RAM), and a storage (an external storage device or an auxiliary storage device).

In the present teaching and embodiments, to produce a state recognition device indicates to create a state recognition device. In the present teaching and embodiments, a method for producing a state recognition device may be a production method of a state recognition device. In the present teaching and embodiments, a method for producing a state recognition device may be a method of manufacturing a state recognition device. In the present teaching and embodiments, a method for producing a state recognition device may be a manufacturing method of a state recognition device.

In the present teaching and embodiments, at least one of plural options encompasses all conceivable combinations of the options. At least one of plural options may be one of the options, some of the options, or all of the options. For example, at least one of A, B, or C indicates only A, only B, only C, A and B, A and C, B and C, or A, B, and C.

In the claims, when the number of constituent features is not clearly specified and the constituent feature is expressed in a singular form in English, the number of the constituent feature may be more than one in the present teaching. In the present teaching, the number of the constituent features may be only one.

In the present teaching and embodiments, terms "including", "having", "comprising", and derivatives thereof are used to encompass not only listed items and equivalents thereof but also additional items.

Unless otherwise defined, all terms (technical and scientific terms) used in this description and claims indicate meanings typically understood by a person with ordinary skill in the art in the technical field to which the present teaching belongs. Terms such as those defined in commonly used dictionaries are to be interpreted as having meaning that is consistent with their meaning in the context of the relevant art and the present disclosure, and are not to be interpreted in an idealized or excessively formal sense.

In addition, in the description, the term "may" is non-exclusive. "May be" means "may be but not limited to". In the description, "may" implicitly encompasses "do not". In the description, an arrangement which is explained by using the term "may" exerts at least the above-described effects of the arrangement of claim 1.

Before the embodiments of the present teaching are detailed, it is informed that the present teaching is not limited to the configurations and layout of elements described below and/or shown in drawings. The present teaching is also applicable to embodiments other than the embodiments described later. The present teaching may be implemented as an embodiment other than the below-described embodiment.

### [Advantageous Effects]

The state recognition device of the present teaching makes it possible to increase the frequency of identification or to improve the degree of freedom in designing hardware resources.

### [Brief Description of Drawings]

FIG. 1 illustrates a state recognition device of a First Embodiment of the present teaching.
FIG. 2 illustrates a state recognition device of a Second Embodiment of the present teaching.
FIG. 3 illustrates a state recognition device of a Third Embodiment of the present teaching.
FIG. 4(a) is a graph showing a Mahalanobis' distance when the catalyst is normal, and FIG. 4(b) is a histogram of the Mahalanobis' distance shown in FIG. 4(a).
FIG. 5 is a partially-enlarged graph of the graph shown in FIG. 4(a).
FIG. 6(a) is a graph showing a Mahalanobis' distance when the catalyst is deteriorated, and FIG. 6(b) is a histogram of the Mahalanobis' distance shown in FIG. 6(a).
FIG. 7 is a partially-enlarged graph of the graph shown in FIG. 6(a).
FIG. 8 illustrates a state recognition device of a Fourth Embodiment of the present teaching.

### [Description of Embodiments]

### <First Embodiment>

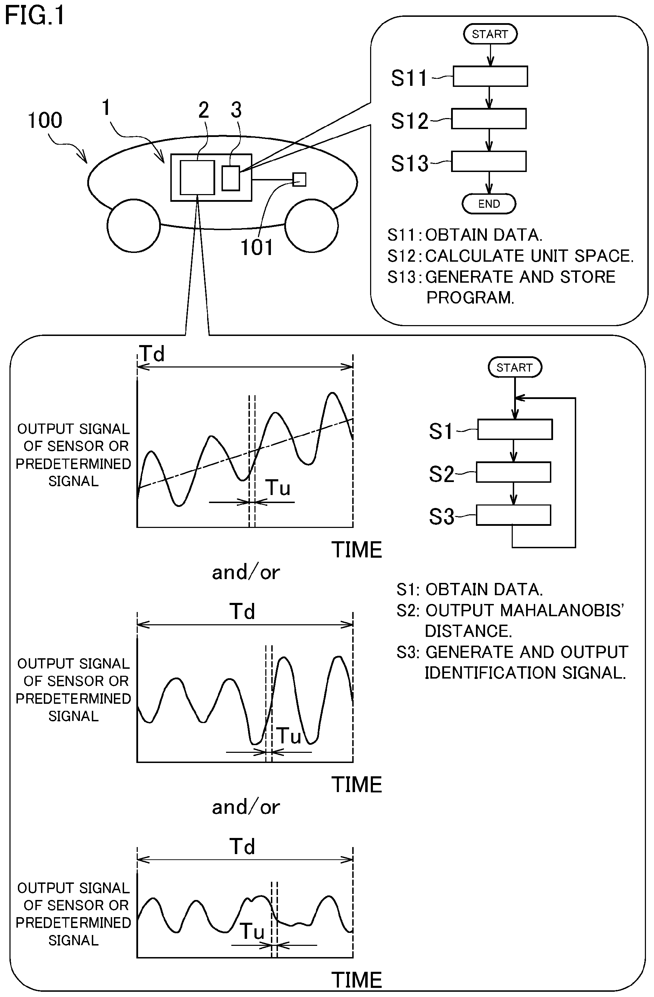

The following will describe a state recognition device 1 of the First Embodiment of the present teaching with reference to FIG. 1. The state recognition device 1 of the First Embodiment outputs an identification signal by which a state of a vehicle 100 or a state of part of the vehicle 100 is identified based on either an output signal of a sensor 101 mounted on the vehicle 100 whose driving environment and driving state vary or a predetermined signal generated from the output signal of the sensor 101, for controlling the vehicle 100, for providing a notification to a user, or for collecting data regarding the vehicle 100. While FIG. 1 shows an example in which the state recognition device 1 is mounted on the vehicle 100, the state recognition device 1 may be a device that is not mounted on the vehicle 100 and is able to communicate with a device mounted on the vehicle 100. The output signal of the sensor 101 or the predetermined signal is a continuous vibration signal that vibrates at least in a steady state where at least the driving environment and the driving state stay unchanged. Three graphs in FIG. 1 show an example of the continuous vibration signal in which the center of vibration varies due to a change of at least one of the driving environment or the driving state, an example of the continuous vibration signal in which the amplitude of vibration varies due to a change of at least one of the driving environment or the driving state, and an example of the continuous vibration signal in which the cycle of vibration is disturbed due to a change of at least one of the driving environment or the driving state, respectively. The vertical axis in each of the three graphs in FIG. 1 indicates an output signal of the sensor 101 or a predetermined signal generated from the output signal of the sensor 101.

The state recognition device 1 includes a processor 2 and a storage device 3. The processor 2 executes an identification signal output process of outputting a Mahalanobis' distance on which a characteristic amount regarding a change of the continuous vibration signal in which signal disturbance occurs is reflected by means of a later-described Mahalanobis' distance output unit generated based on a unit space calculated by means of the MT method, and identifying whether the state of the vehicle 100 or the state of part of the vehicle 100 is a predetermined state with reference to the Mahalanobis' distance, based on sets of data per unit period Tu of the continuous vibration signal in which signal disturbance occurs in an identification period Td, which are less susceptible to a variation including both increase and decrease and are obtained in the identification period Td, when the signal disturbance that is at least one of a variation of the center of vibration, a variation of the amplitude of vibration, or disturbance of the cycle of vibration of the continuous vibration signal occurs due to a change of at least one of the driving environment or the driving state. The identification period Td is as long as or longer than a half of one cycle when the cycle of vibration of the continuous vibration signal is undisturbed, and is arranged so that one driving cycle includes plural identification periods Td. The identification period Td shown in FIG. 1 is a mere example of the identification period Td. The unit period Tu shown in FIG. 1 is a mere example of the unit period Tu. The state recognition device 1 of the First Embodiment makes it possible to increase the frequency of output of the identification signal or to improve the degree of freedom in designing hardware resources.

The processor 2 is configured to execute at least the identification signal output process by reading a program that is stored in the storage device 3 in advance. The processor 2 executes the identification signal output process based on the flowchart shown in FIG. 1, for example. In the step S1, the processor 2 obtains plural sets of data per unit period Tu of the continuous vibration signal, which are obtained in the identification period Td, when signal disturbance is occurring due to a change of at least one of the driving environment or the driving state.

Subsequently, in the step S2, by reading a later-described Mahalanobis' distance output program and executing a process, the processor 2 outputs a Mahalanobis' distance by using a later-described Mahalanobis' distance output unit generated based on a unit space calculated by means of the MT method, based on the sets of data obtained in the step S1. Because the sets of data obtained in the step S1 are data of the continuous vibration signal when signal disturbance is occurring therein, a characteristic amount regarding a change of the continuous vibration signal in which the signal disturbance occurs is reflected on the Mahalanobis' distance calculated in the step S2.

Subsequently, in the step S3, the processor 2 outputs, based on the Mahalanobis' distance, an identification signal which identifies whether the state of the vehicle 100 or the state of part of the vehicle 100 is a predetermined state or a state other than the predetermined state.

The state recognition device 1 of the First Embodiment outputs the identification signal not only when signal disturbance is occurring in the continuous vibration signal. The state recognition device 1 is able to output the identification signal when signal disturbance does not occur in the continuous vibration signal, too. In other words, the state recognition device 1 is able to output the identification signal irrespective of whether signal disturbance is occurring in the continuous vibration signal.

The following will describe the process in the step S2 of, by reading the Mahalanobis' distance output program and executing a process, outputting the Mahalanobis' distance by using the Mahalanobis' distance output unit generated based on the unit space calculated by means of the MT method, based on the data of the continuous vibration signal obtained in the step S1.

In the First Embodiment, the program that is stored in the storage device 3 to execute the identification signal output process includes the Mahalanobis' distance output program by which, in the step S2, the process of outputting the Mahalanobis' distance based on sets of data obtained in the step S1 is executed. In the First Embodiment, the processor 2 functions as the Mahalanobis' distance output unit configured to output the Mahalanobis' distance, by reading the Mahalanobis' distance output program stored in the storage device 3 and executing the process.

The Mahalanobis' distance that the processor 2 outputs by reading the Mahalanobis' distance output program and executing the process is arranged so that, the closer the sets of data obtained in the step S1 are to the data group based on which the unit space is calculated, the closer the Mahalanobis' distance calculated in the step S2 is to 1.

In the First Embodiment, as the program for executing the identification signal output process is stored in the storage device 3 to allow the processor 2 to read the program stored in the storage device 3 and to execute the identification signal output process, the state recognition device configured to output the identification signal, which identifies whether the state of the vehicle or the state of part of the vehicle is the predetermined state or the state other than the predetermined state is produced. In the First Embodiment, the state recognition device 1 is produced in a manner described below.

To begin with, in the step S11, an external processing device provided outside the vehicle 100 obtains plural sets of data of the continuous vibration signal per unit period Tu in the identification period Td. The data of the continuous vibration signal obtained in the step S11 includes the data of the continuous vibration signal in which signal disturbance occurs. The data obtained in the step S11 is either the data of the continuous vibration signal when the state of the vehicle 100 or the state of part of the vehicle 100 is the predetermined state or the data of the continuous vibration signal when the state of the vehicle 100 or the state of part of the vehicle 100 is the state other than the predetermined state.

Subsequently, in the step S12, the external processing device calculates a single unit space by means of the MT method, based on the sets of data per unit period Tu of the continuous vibration signal obtained during the identification period Td in the step S11. The unit space calculated in the step S12 functions as a reference for identifying whether the state of the vehicle 100 or part of the vehicle 100 is the predetermined state or the state other than the predetermined state. In the First Embodiment, the step S12 is equivalent to an example of a unit space calculation step of the present teaching. Because the MT method has been known, the method of calculating the unit space in the step S12 is not detailed. When the data obtained in the step S11 is the data of the continuous vibration signal when the state of the vehicle 100 or the state of part of the vehicle 100 is the predetermined state, the unit space calculated in the step S12 is a unit space corresponding to the case where the state of the vehicle 100 or the state of part of the vehicle 100 is the predetermined state. In this case, the Mahalanobis' distance calculated in the step S2 is close to 1 when the state of the vehicle 100 or the state of part of the vehicle 100 is the predetermined state, and is significantly larger than 1 when the state of the vehicle 100 or the state of part of the vehicle 100 is the state other than the predetermined state.

When the data obtained in the step S11 is the data of the continuous vibration signal when the state of the vehicle 100 or the state of part of the vehicle 100 is the state other than the predetermined state, the unit space calculated in the step S12 is a unit space corresponding to the case where the state of the vehicle 100 or the state of part of the vehicle 100 is the state other than the predetermined state. In this case, the Mahalanobis' distance calculated in the step S2 is close to 1 when the state of the vehicle 100 or the state of part of the vehicle 100 is the state other than the predetermined state, and is significantly larger than 1 when the state of the vehicle 100 or the state of part of the vehicle 100 is the predetermined state.

In the step S11, data of the continuous vibration signal in various driving states of the vehicle 100 may be obtained, and a single unit space may be calculated in the step S12 based on the data of the continuous vibration signal in various driving states of the vehicle 100.

Subsequently, in the step S13, the external processing device generates the program for executing the identification signal output process, and stores the program in the storage device 3. As described above, the program for executing the identification signal output process includes the Mahalanobis' distance output program. When the program for executing the identification signal output process is generated in the step S13, the Mahalanobis' distance output program is generated based on the unit space calculated by means of the MT method in the step S12. Through the above-described steps S11 to S13, the state recognition device 1 is produced.

As a matter of course, the data of the continuous vibration signal obtained in the above-described step S1 for identifying whether the state of the vehicle 100 or the state of part of the vehicle 100 is the predetermined state or the state other than the predetermined state and the data of the continuous vibration signal obtained in the step S11 for calculating the unit space are sets of data of the continuous vibration signal obtained at different timings.

### <Second Embodiment>

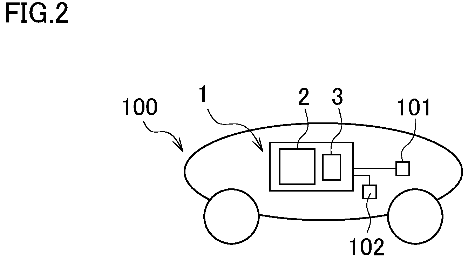

The following will describe a state recognition device 1 of the Second Embodiment of the present teaching with reference to FIG. 2. The Second Embodiment encompasses the features of the First Embodiment. In the Second Embodiment, in the step S11, the external processing device obtains sets of data of the continuous vibration signal per unit period Tu in the identification period Td and data of an output signal of at least one different sensor 102 mounted on the vehicle 100. In the step S12, the external processing device calculates a unit space by means of the MT method, based on the sets of data per unit period Tu of the continuous vibration signal obtained in the identification period Td in the step S11 and data of the output signal of the different sensor 102. In the step S13, the external processing device generates a program for executing the identification signal output process, which includes a Mahalanobis' distance output program corresponding to the calculated unit space, and stores the generated program in the storage device 3 of the state recognition device 1. In this way, the state recognition device 1 is produced in the Second Embodiment.

In the step S2 of the identification signal output process, by reading the Mahalanobis' distance output program stored in the storage device 3 and executing the process, the processor 2 of the state recognition device 1 of the Second Embodiment outputs the Mahalanobis' distance by using the Mahalanobis' distance output unit generated based on the unit space calculated by means of the MT method, based on sets of data per unit period Tu of the continuous vibration signal that is either the output signal of the sensor 101 or the predetermined signal generated from the output signal of the second 101, which are obtained in the identification period Td, and data of the output signal of the at least one different sensor 102 mounted on the vehicle 100. In the step S3, the processor 2 outputs the identification signal based on the Mahalanobis' distance. In the Second Embodiment, the continuous vibration signal that is either the output signal of the sensor 101 or the predetermined signal generated from the output signal of the sensor 101 is termed a first continuous vibration signal.

Calculation of a unit space by means of the MT method based on sets of data per unit period Tu of the first continuous vibration signal obtained in the identification period Td and data of the output signal of at least one different sensor 102 may be calculation of a unit space by means of the MT method based on sets of data per unit period Tu of the first continuous vibration signal obtained in the identification period Td and data of the output signal itself of at least one different sensor 102. In this case, to output the Mahalanobis' distance by using the Mahalanobis' distance output unit generated based on the unit space calculated by means of the MT method, based on sets of data per unit period Tu of the first continuous vibration signal obtained in the identification period Td and data of the output signal of at least one different sensor 102 is to output the Mahalanobis' distance by using the Mahalanobis' distance output unit generated based on the unit space calculated by means of the MT method, based on sets of data per unit period Tu of the first continuous vibration signal obtained in the identification period Td and data of the output signal itself of at least one different sensor 102.

Calculation of a unit space by means of the MT method based on sets of data per unit period Tu of the first continuous vibration signal obtained in the identification period Td and data of the output signal of at least one different sensor 102 may be calculation of a unit space by means of the MT method based on sets of data per unit period Tu of the first continuous vibration signal obtained in the identification period Td and data of another signal generated based on the output signal of at least one different sensor 102. In this case, to output the Mahalanobis' distance by using the Mahalanobis' distance output unit generated based on the unit space calculated by means of the MT method, based on sets of data per unit period Tu of the first continuous vibration signal obtained in the identification period Td and data of the output signal of at least one different sensor 102 is to output the Mahalanobis' distance by using the Mahalanobis' distance output unit generated based on the unit space calculated by means of the MT method, based on sets of data per unit period Tu of the first continuous vibration signal obtained in the identification period Td and data of another signal generated from the output signal of at least one different sensor 102.

The output signal of the different sensor 102 or the another signal generated from the output signal of the different sensor 102 may be a second continuous vibration signal that vibrates at least in the steady state. In this case, in the step S12, when signal disturbance is occurring in the first continuous vibration signal and the second continuous vibration signal due to a change of at least one of the driving environment or the driving state, a unit space may be calculated by means of the MT method based on sets of data per unit period Tu of the first continuous vibration signal, which are obtained in the identification period Td, and sets of data per unit period Tu of the second continuous vibration signal, which are obtained in the identification period Td. In this case, in the step S2 of the identification signal output process, when signal disturbance is occurring in the first continuous vibration signal and the second continuous vibration signal due to a change of at least one of the driving environment or the driving state, the processor 2 outputs the Mahalanobis' distance on which a characteristic amount regarding a change of the first continuous vibration signal in which signal disturbance occurs and a change of the second continuous vibration signal in which signal disturbance occurs is reflected, by using the Mahalanobis' distance output unit generated based on a unit space calculated by means of the MT method, based on sets of data per unit period Tu of the first continuous vibration signal, which are obtained in the identification period Td, and sets of data per unit period Tu of the second continuous vibration signal, which are obtained in the identification period Td. While the number of the at least one different sensor 102 is one in FIG. 2, the number may be more than one.

### <Third Embodiment>

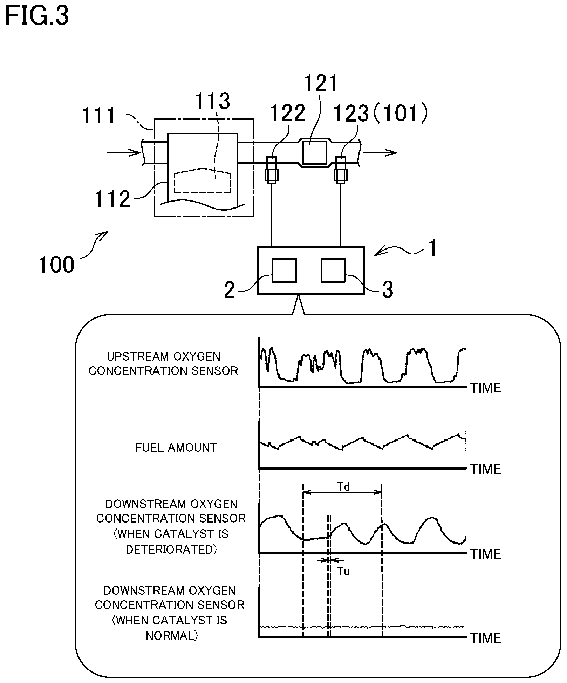

The following will describe a state recognition device 1 of the Third Embodiment of the present teaching with reference to FIG. 3. The Third Embodiment encompasses the features of the First Embodiment. The state recognition device 1 of the Third Embodiment is an example in which a state recognition device of the present teaching is applied to a catalyst deterioration diagnosis device that is configured to output an identification signal by which the deterioration state of a catalyst is identified. It is noted that the example of applying the state recognition device of the present teaching to the catalyst deterioration diagnosis device is not limited to the Third Embodiment.

In the Third Embodiment, the vehicle 100 includes an engine unit 111, a catalyst 121, an upstream oxygen concentration sensor 122, and a downstream oxygen concentration sensor 123. The downstream oxygen concentration sensor 123 is equivalent to an example of the sensor 101 of the First Embodiment. The engine unit 111 includes an engine 112 and an unillustrated fuel supplier configured to supply fuel to a combustion chamber 113 of the engine 112. The catalyst 121 is configured to purify exhaust gas exhausted from the combustion chamber 113 of the engine 112. The catalyst 121 may be, for example, a three-way catalyst. The upstream oxygen concentration sensor 122 and the downstream oxygen concentration sensor 123 are configured to detect oxygen concentration in exhaust gas exhausted from the combustion chamber 113. The upstream oxygen concentration sensor 122 is provided upstream of the catalyst 121 in a flow direction of exhaust gas exhausted from the combustion chamber 113. The downstream oxygen concentration sensor 123 is provided downstream of the catalyst 121 in the flow direction of the exhaust gas. The upstream oxygen concentration sensor 122 and the downstream oxygen concentration sensor 123 are configured to detect that the oxygen concentration in the exhaust gas is higher than a first concentration or is lower than a second concentration. The first concentration may be higher than or equal to the second concentration. FIG. 3 shows an example of the relationship between changes of an output signal of the upstream oxygen concentration sensor 122, changes of a fuel amount supplied from the fuel supplier to the combustion chamber 113, and changes of an output signal of the downstream oxygen concentration sensor 123 when the catalyst 121 is deteriorated and when the catalyst 121 is not deteriorated.

An output signal of the upstream oxygen concentration sensor 122 is a signal indicating whether the air-fuel ratio of an air-fuel mixture is rich or lean. When the air-fuel ratio of the air-fuel mixture is rich, the output signal of the upstream oxygen concentration sensor 122 is in a rich state. When the air-fuel ratio of the air-fuel mixture is lean, the output signal of the upstream oxygen concentration sensor 122 is in a lean state. When the air-fuel ratio of the air-fuel mixture is rich, fuel is excessive as compared to a target air-fuel ratio. When the air-fuel ratio of the air-fuel mixture is lean, air is excessive as compared to the target air-fuel ratio.

The engine 112 is driven so that increase and decrease of the fuel amount supplied from the fuel supplier to the combustion chamber 113 are switched based on timings at which the rich state and the lean state of the output signal of the upstream oxygen concentration sensor 122 are switched. To be more specific, the fuel amount is controlled so that a state of decrease in fuel amount is switched to a state of increase in fuel amount, based on a switch of the output signal of the upstream oxygen concentration sensor 122 to the lean state. The fuel amount is controlled so that the state of increase in fuel amount is switched to the state of decrease in fuel amount, based on a switch of the output signal of the upstream oxygen concentration sensor 122 to the rich state.

The output signal of the downstream oxygen concentration sensor 123 varies depending on whether the catalyst 121 is normal or deteriorated. When the catalyst 121 is normal, the output signal of the downstream oxygen concentration sensor 123 scarcely changes. When the catalyst 121 is normal and the steady state where at least the driving environment and the driving state stay unchanged is established, the output signal of the downstream oxygen concentration sensor 123 is maintained in either a first state in which the oxygen concentration of the exhaust gas is lower than a predetermined concentration or a second state in which the oxygen concentration of the exhaust gas is higher than the predetermined concentration. However, even though at least one of the driving environment or the driving state is unchanged, when the catalyst 121 is normal, the output signal of the downstream oxygen concentration sensor 123 may be changed from a state of being maintained in the first state to a state of being maintained in the second state, or from a state of being maintained in the second state to a state of being maintained in the first state. Even though at least one of the driving environment or the driving state is unchanged, when the catalyst 121 is normal and the output signal of the downstream oxygen concentration sensor 123 is maintained in the first state or the second state, the value of the output signal of the downstream oxygen concentration sensor 123 may be a continuous vibration signal that slightly increases and decreases. When the catalyst 121 is normal and at least one of the driving environment or the driving state has changed, the output signal of the downstream oxygen concentration sensor 123 may change in accordance with the change of the at least one of the driving environment or the driving state. For example, when the catalyst 121 is normal and at least one of the driving environment or the driving state has changed, the output signal of the downstream oxygen concentration sensor 123 may change from the first state to the second state, or from the second state to the first state. On the other hand, when the catalyst 121 is deteriorated, the output signal of the downstream oxygen concentration sensor 123 is a continuous vibration signal that vibrates in accordance with a change of the fuel amount supplied from the fuel supplier to the combustion chamber 113. In other words, when the catalyst 121 is deteriorated and the steady state where at least the driving environment and the driving state stay unchanged is established, the output signal of the downstream oxygen concentration sensor 123 is a continuous vibration signal. When the catalyst 121 is deteriorated and the steady state where at least the driving environment and the driving state stay unchanged is established, the shorter the cycle of the fuel amount during a given period is, the shorter the cycle of the continuous vibration signal of the downstream oxygen concentration sensor 123 in that period tends to be. When the catalyst 121 is deteriorated and at least one of the driving environment or the driving state has changed, the output signal of the downstream oxygen concentration sensor 123 may be a continuous vibration signal in which the cycle of vibration is disturbed due to the change of the at least one of the driving environment or the driving state. To be more specific, when the catalyst 121 is deteriorated, the output signal of the downstream oxygen concentration sensor 123 may be a continuous vibration signal in which the cycle of vibration is disturbed due to an influence of disturbance of the cycle of the fuel amount on account of an influence of the change of the at least one of the driving environment or the driving state. When the catalyst 121 is deteriorated and at least one of the driving environment or the driving state has changed, the output signal of the downstream oxygen concentration sensor 123 may be a continuous vibration signal in which the cycle of vibration is disturbed and the amplitude of vibration is changed due to the change of the at least one of the driving environment or the driving state.

In the Third Embodiment, in the step S12, the external processing device calculates a unit space by means of the MT method, based on sets of data per unit period Tu of the output signal of the downstream oxygen concentration sensor 123, which are obtained in the identification period Td, the output signal being the continuous vibration signal in which signal disturbance that is at least one of disturbance of the cycle of vibration or a change of the amplitude of vibration occurs on account of a change of at least one of the driving environment or the driving state. The unit space calculated in the step S12 of the Third Embodiment is a reference for identifying whether the catalyst 121 is normal or deteriorated. In the step S13, the external processing device generates a program for executing the identification signal output process, which includes a Mahalanobis' distance output program corresponding to the calculated unit space, and stores the generated program in the storage device 3 of the state recognition device 1. In this way, the state recognition device 1 is produced in the Third Embodiment.

In the step S2 of the identification signal output process, by reading the Mahalanobis' distance output program stored in the storage device 3 and executing the process, the processor 2 of the state recognition device 1 outputs the Mahalanobis' distance on which a characteristic amount regarding a change of the continuous vibration signal in which signal disturbance occurs is reflected, by using the Mahalanobis' distance output unit generated based on the unit space calculated by means of the MT method, based on sets of data per unit period Tu of the output signal of the downstream oxygen concentration sensor 123 obtained in the identification period Td, which is the continuous vibration signal in which signal disturbance that is at least one of a disturbance of the cycle of vibration or a change of the amplitude of vibration occurs on account of a change of at least one of the driving environment or the driving state. In the step S3, the processor 2 outputs the identification signal by which the deterioration state of the catalyst 121 is identified, based on the Mahalanobis' distance. The identification signal for identifying the deterioration state of the catalyst 121 is a signal which identifies whether the catalyst 121 is normal or deteriorated. The identification period Td is as long as or longer than a half of one cycle when the cycle of vibration of the continuous vibration signal of the downstream oxygen concentration sensor 123 is undisturbed, and is arranged so that one driving cycle includes plural identification periods Td. Now, assume that the identification period Td is a period shorter than a half of one cycle when the cycle of vibration of the continuous vibration signal of the downstream oxygen concentration sensor 123 is undisturbed. In this case, when the output signal of the downstream oxygen concentration sensor 123 is reversed only once from the first state to the second state or from the second state to the first state during the identification period Td, it is difficult to determine whether the catalyst 121 is deteriorated. Because the identification period Td is equal to or longer than a half of one cycle when the cycle of vibration of the continuous vibration signal of the downstream oxygen concentration sensor 123 is undisturbed, a characteristic with which the deterioration state of the catalyst 121 can be determined appears in the output signal of the downstream oxygen concentration sensor during the identification period Td. The length of the identification period Td may be set regardless of the length of the cycle of the fuel amount, or may be set in accordance with the length of the cycle of the fuel amount. The identification period Td may be, for example, a period of about one second. The identification period Td may be, for example, a period that is more or less equivalent to four cycles of the fuel amount. The unit period Tu may be a duration of about 10 to 30 milliseconds, for example.

In the step S2 of the identification signal output process, the processor 2 of the state recognition device 1 may output the Mahalanobis' distance on which plural types of characteristic amounts regarding a change of the continuous vibration signal in which signal disturbance occurs are reflected in the identification period Td by using the Mahalanobis' distance output unit generated based on a unit space calculated by means of the MT method.

In the Third Embodiment, in the step S12, the external processing device may calculate a unit space based on data of the output signal of the downstream oxygen concentration sensor 123 when the catalyst 121 is normal. In this case, in the step S2 of the identification signal output process, the processor 2 outputs the Mahalanobis' distance by using the Mahalanobis' distance output unit generated based on the unit space calculated based on the data of the output signal of the downstream oxygen concentration sensor 123 when the catalyst 121 is normal.

In the Third Embodiment, in the step S12, the external processing device may calculate a unit space based on data of the output signal of the downstream oxygen concentration sensor 123 when the catalyst 121 is deteriorated. In this case, in the step S2 of the identification signal output process, the processor 2 outputs the Mahalanobis' distance by using the Mahalanobis' distance output unit generated based on the unit space calculated based on the data of the output signal of the downstream oxygen concentration sensor 123 when the catalyst 121 is deteriorated.

In the Third Embodiment, in the step S12, the external processing device may calculate a unit space based on data of the output signal of the downstream oxygen concentration sensor 123 in various driving states of the vehicle 100. For example, the unit space may be calculated based on the data of the output signal of the downstream oxygen concentration sensor 123 in various driving ranges of the engine 112. To be more specific, for example, the unit space may be calculated based on the data of the output signal of the downstream oxygen concentration sensor 123 when the engine rotation speed is different. Alternatively, in the step S12, the external processing device may calculate a unit space based on data of the output signal of the downstream oxygen concentration sensor 123 in various driving environments of the vehicle 100.

In the Third Embodiment, a state in which the catalyst is normal may be an example of the predetermined state in the First Embodiment, and a state in which the catalyst is deteriorated may be an example of the state different from the predetermined state in the First Embodiment. Alternatively, a state in which the catalyst is deteriorated may be an example of the predetermined state in the First Embodiment, and a state in which the catalyst is normal may be an example of the state different from the predetermined state in the First Embodiment.

The processor 2 of the state recognition device 1 may perform the identification signal output process by using the output signal of the downstream oxygen concentration sensor 123 when the fuel amount is controlled not for the diagnosis of the deterioration state of the catalyst 121. Alternatively, the processor 2 of the state recognition device 1 may perform the identification signal output process by using the output signal of the downstream oxygen concentration sensor 123 when the fuel amount is controlled for the diagnosis of the deterioration state of the catalyst 121.

The Third Embodiment may or may not include the features of the Second Embodiment. When the Third Embodiment includes the features of the Second Embodiment, the upstream oxygen concentration sensor 122 may be equivalent to an example of the different sensor 102 of the Second Embodiment.

The processor 2 of the state recognition device 1 of the Third Embodiment may be configured to execute, in addition to the identification signal output process of the present teaching, an identification signal output process of outputting an identification signal by which the deterioration state of the catalyst 121 is identified, which is different from the identification signal output process of the present teaching.

When, for example, the deterioration state of the catalyst 121 is diagnosed based on data regarding the responsiveness of the downstream oxygen concentration sensor 123 as described in Patent Literature 1, being different from the Third Embodiment, the identification signal by which the deterioration state of the catalyst 121 can be correctly identified (diagnosed) may not be output when the cycle of vibration of the continuous vibration signal of the downstream oxygen concentration sensor 123 is disturbed due to a change of at least one of the driving environment or the driving state, even when the catalyst 121 is deteriorated.

In this regard, the state recognition device 1 of the Third Embodiment outputs the Mahalanobis' distance by using a Mahalanobis' distance output unit generated based on a unit space calculated by means of the MT method, based on sets of data per unit period Tu of the output signal (continuous vibration signal) of the downstream oxygen concentration sensor 123 in a relatively long identification period Td, and outputs an identification signal for identifying the deterioration state of the catalyst 121, based on the Mahalanobis' distance. On this account, when the catalyst 121 is deteriorated, an identification signal, by which the deterioration state of the catalyst 121 is further precisely identified, can be output even if signal disturbance is occurring in the continuous vibration signal that is an output signal of the downstream oxygen concentration sensor 123, due to a change of at least one of the driving environment or the driving state.

Furthermore, in the state recognition device 1 of the Third Embodiment, because the identification period Td is relatively long, a characteristic with which the deterioration state of the catalyst 121 can be identified appears in the output signal (continuous vibration signal) of the downstream oxygen concentration sensor 123 in the identification period Td, when the catalyst 121 is deteriorated. Due to this, the identification signal by which the deterioration state of the catalyst 121 is identified can be easily output by outputting the Mahalanobis' distance by using a Mahalanobis' distance output unit generated based on a unit space calculated by means of the MT method, and outputting an identification signal by which the deterioration state of the catalyst 121 is identified based on the Mahalanobis' distance.

When the Mahalanobis' distance is output by using a Mahalanobis' distance output unit generated based on a unit space calculated by means of the MT method and an identification signal by which the deterioration state of the catalyst 121 is identified (diagnosed) is output based on the Mahalanobis' distance, the process for identifying the deterioration state of the catalyst 121 is simplified as compared to a case where an identification signal by which the deterioration state of the catalyst 121 is identified (diagnosed) is output based on the responsiveness of the downstream oxygen concentration sensor 123. This makes it possible to reduce the development man-hour of the state recognition device 1. Furthermore, the computing load of the processor 2 is reduced and the degree of freedom in designing the hardware resources is improved.

When the Mahalanobis' distance is output by using a Mahalanobis' distance output unit generated based on a unit space calculated by means of the MT method and an identification signal by which the deterioration state of the catalyst 121 is identified (diagnosed) is output based on the Mahalanobis' distance, the time required for outputting the identification signal can be shortened as compared to a case where an identification signal by which the deterioration state of the catalyst 121 is identified (diagnosed) is output based on data of the responsiveness of the downstream oxygen concentration sensor 123. This makes it possible to diagnose the deterioration state of the catalyst 121 in real time.

Being different from the Third Embodiment, when the deterioration state of the catalyst 121 is diagnosed based on data regarding the responsiveness of the downstream oxygen concentration sensor 123, it is necessary to increase the cycle and amplitude of changes of the fuel amount.

In this regard, the state recognition device 1 of the Third Embodiment outputs the Mahalanobis' distance by using a Mahalanobis' distance output unit generated based on a unit space calculated by means of the MT method, based on sets of data per unit period Tu of the output signal of the downstream oxygen concentration sensor 123 in an identification period Td, and outputs an identification signal for identifying (diagnosing) the deterioration state of the catalyst 121, based on the Mahalanobis' distance. Due to this, the deterioration state of the catalyst 121 can be diagnosed with a short cycle and a small amplitude of changes of the fuel amount, as compared to a case where the deterioration state of the catalyst 121 is diagnosed based on data of the responsiveness of the downstream oxygen concentration sensor 123.

When the cycle and amplitude of changes of the fuel amount are increased, the catalyst 121 needs to be large enough to be able to purify the exhaust gas after the increase of the cycle and amplitude of the changes of the fuel amount. In this regard, according to the Third Embodiment, it is possible to diagnose the deterioration state of the catalyst 121 without increasing the cycle and amplitude of the changes of the fuel amount. This makes it possible to suppress the upsizing of the catalyst 121.

The purification performance of purifying the exhaust gas by the catalyst 121 is high when a difference between the actual air-fuel ratio and the stoichiometric air-fuel ratio is small. In this connection, when the cycle and amplitude of the changes of the fuel amount are increased, the difference between the actual air-fuel ratio and the stoichiometric air-fuel ratio may become large. According to the Third Embodiment, it is possible to diagnose the deterioration state of the catalyst 121 without increasing the cycle and amplitude of the changes of the fuel amount. It is therefore possible to improve the purification performance of purifying the exhaust gas by the catalyst 121 by decreasing the difference between the actual air-fuel ratio and the stoichiometric air-fuel ratio.

Furthermore, in the Third Embodiment, because it is unnecessary to increase the cycle and amplitude of changes of the fuel amount as compared to a case where the deterioration state of the catalyst 121 is diagnosed based on data regarding the responsiveness of the downstream oxygen concentration sensor 123, the drivability of the vehicle 100 can be improved. This effect is particularly conspicuous when the deterioration state of the catalyst 121 is diagnosed without controlling the fuel amount for the diagnosis of the deterioration state of the catalyst 121.

Furthermore, in the Third Embodiment, because it is unnecessary to increase the cycle and amplitude of changes of the fuel amount for the purpose of the diagnosis of the deterioration state of the catalyst 121 as compared to a case where the deterioration state of the catalyst 121 is diagnosed based on data regarding the responsiveness of the downstream oxygen concentration sensor 123, opportunities of diagnosis of the deterioration state of the catalyst 121 can be easily secured.

When the deterioration state of the catalyst 121 is diagnosed based on the data regarding the responsiveness of the downstream oxygen concentration sensor 123, the driving range of the engine 112 with which the diagnosis is possible is restricted. In this connection, in the step S2 of the identification signal output process, when signal disturbance is occurring in the output signal (continuous vibration signal) of the downstream oxygen concentration sensor 123 due to a change of at least one of the driving environment or the driving state of the vehicle 100, the processor 2 of the state recognition device 1 of the Third Embodiment outputs the Mahalanobis' distance on which a characteristic amount regarding a change of the continuous vibration signal in which the signal disturbance occurs is reflected by using a Mahalanobis' distance output unit generated based on a unit space calculated by means of the MT method, based on sets of data per unit period of the continuous vibration signal of the downstream oxygen concentration sensor 123 in the identification period Td, which are less susceptible to changes including both increase and decrease and are obtained in the identification period Td. In the step S3, the processor 2 outputs an identification signal, which identifies whether the catalyst 121 is normal or deteriorated is identified (diagnosed), based on the Mahalanobis' distance. It is therefore possible to widen the driving range of the engine 112 with which the diagnosis is possible, as compared to a case where whether the deterioration state of the catalyst 121 is normal or deteriorated is diagnosed based on the data regarding the responsiveness of the downstream oxygen concentration sensor 123. It is therefore possible to increase the opportunities of the diagnosis of the deterioration state of the catalyst 121. For example, the range of the engine rotation speed with which the diagnosis is possible may be widened to cover a low-speed range. This may make it possible, for example, to diagnose the deterioration state of the catalyst 121 in a lower half of the range of the engine rotation speed, when the range is divided in half. The arrangement above may further make it possible, for example, to diagnose the deterioration state of the catalyst 121 in the lowest one among three ranges of the engine rotation speed, when the range of the engine rotation speed is equally divided into three ranges. Furthermore, for example, when the engine rotation speed is at an idling rotation speed, it may be possible to diagnose the deterioration state of the catalyst 121. Furthermore, for example, the range of the engine rotation speed with which the diagnosis is possible may be widened to cover a high-speed range. As the driving range of the engine 112 with which the diagnosis is possible is widened, the vehicle speed range of the vehicle 100 with which the diagnosis is possible is widened. For example, the range of the vehicle speed with which the diagnosis is possible may be widened to cover a low-speed range. This may make it possible, for example, to diagnose the deterioration state of the catalyst 121 in a lower half of the range of the vehicle speed, when the range is divided in half. The arrangement above may further make it possible, for example, to diagnose the deterioration state of the catalyst 121 in the lowest one among three ranges, when the range of the vehicle speed is equally divided into three ranges. Furthermore, for example, at the vehicle speed when the engine rotation speed is at an idling rotation speed, it may be possible to diagnose the deterioration state of the catalyst 121. For example, the range of the vehicle speed with which the diagnosis is possible may be widened to cover a high-speed range.

### <Specific Example of Third Embodiment>

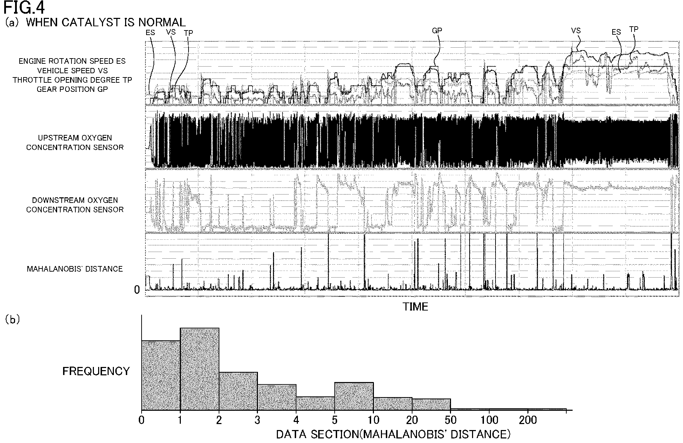

The following will describe a state recognition device 1 of a specific example of the Third Embodiment of the present teaching with reference to FIG. 4(a), FIG. 4(b), FIG. 5, FIG. 6(a), FIG. 6(b), and FIG. 7. It is noted that specific examples of the Third Embodiment are not limited to the specific example described below. In an identification signal output process, a processor 2 of the state recognition device 1 of this specific example outputs the Mahalanobis' distance on which plural types of characteristic amounts regarding a change of an output signal (continuous vibration signal) of a downstream oxygen concentration sensor 123 in an identification period Td are reflected, by using a Mahalanobis' distance output unit generated based on a unit space calculated by means of the MT method, and outputs a signal regarding the Mahalanobis' distance as an identification signal by which the deterioration state of a catalyst 121 is identified (diagnosed). In the specific example, the plural types of the characteristic amounts regarding a variation of the output signal (continuous vibration signal) of the downstream oxygen concentration sensor 123 in an identification period Td include at least an average, the maximum value, and a standard deviation of an amount of change obtained in each unit period Tu in the identification period Td. In the specific example, the length of the identification period Td is constant regardless of the length of the cycle of the fuel amount. In the specific example, in a step S12, an external processing device may calculate a unit space based on data of output signals of the downstream oxygen concentration sensor 123 and an upstream oxygen concentration sensor 122 when the catalyst 121 is normal. In the step S13, the external processing device generates a program for executing the identification signal output process, which includes a Mahalanobis' distance output program corresponding to the calculated unit space, and stores the generated program in the storage device 3 of the state recognition device 1. In this way, the state recognition device 1 is produced in this specific example. In the specific example, the vehicle 100 includes a multistage transmission (to be more specific, 6-speed transmission).

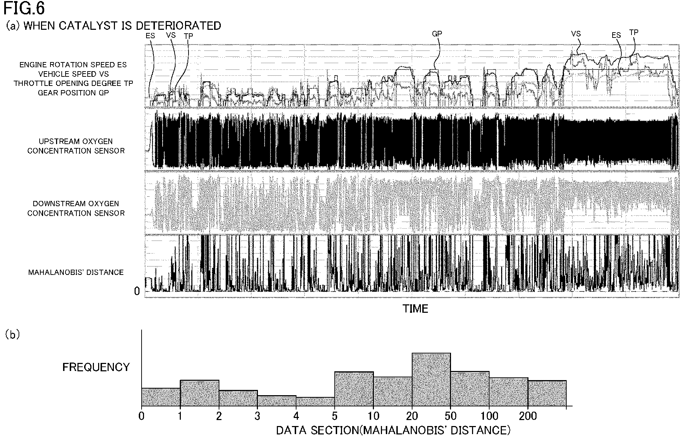

FIG. 4(a) and FIG. 6(a) show an engine rotation speed ES, a vehicle speed VS, a throttle opening degree TP, a gear position (gear stage) GP of the multistage transmission, an output signal of the upstream oxygen concentration sensor 122, and an output signal of the downstream oxygen concentration sensor 123 in one driving cycle. The horizontal axis in a graph of each of FIG. 4(a) and FIG. 6(a) indicates time. The throttle opening degree TP is an opening degree of a throttle valve by which an amount of air supplied to an engine 112 is adjusted. Changes of the engine rotation speed ES, the vehicle speed VS, the throttle opening degree TP, the gear position GP, and the output signal of the upstream oxygen concentration sensor 122 are more or less identical between FIG. 4(a) and FIG. 6(a). The lowest graph in each of FIG. 4(a) and FIG. 6(a) shows the Mahalanobis' distance that is output in each period that is identical in length with the identification period Td, over the entirety of one driving cycle. It is noted that the state recognition device 1 of the specific example is not required to output the Mahalanobis' distance over the entirety of one driving cycle. The state recognition device 1 of the specific example diagnoses the deterioration state of the catalyst 121 by outputting the Mahalanobis' distance of at least one identification period in one driving cycle. In a strict sense, the vertical axis of the lowest graph in each of FIG. 4(a) and FIG. 6(a) indicates a value obtained by squaring the Mahalanobis' distance. Hereinafter, the value obtained by squaring the Mahalanobis' distance is termed a Mahalanobis' distance. The maximum value on the vertical axis of the lowest graph in each of FIG. 4(a) and FIG. 6(a) is 180.

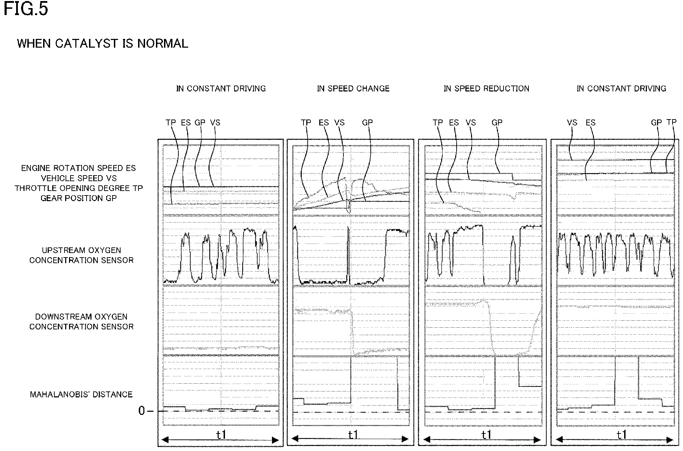

FIG. 4(a) is a graph when the catalyst 121 is normal. FIG. 4(b) is a histogram of the Mahalanobis' distance shown in FIG. 4(a). The horizontal axis of FIG. 4(b) indicates sections of Mahalanobis' distances, whereas the vertical axis indicates the number of Mahalanobis' distances included in each section. As shown in FIG. 4(b), most of the Mahalanobis' distances in one driving cycle shown in FIG. 4(a) are values close to 1. FIG. 5 shows graphs in which four parts of the graphs in FIG. 4(a) are enlarged. It is noted that the maximum value on the vertical axis showing the Mahalanobis' distance in FIG. 5 is 20. The lengths t1 of time in the respective four graphs in FIG. 5 are identical with each other, and each length t1 is plural times as long as the identification period Td.

Among the four graphs in FIG. 5, the leftmost graph indicates steady-state driving in which the driving state of the vehicle 100 scarcely changes, the output signal of the downstream oxygen concentration sensor 123 scarcely changes, and the Mahalanobis' distance is maintained almost at 1. The second graph from the left end indicates a case where the gear position GP is changed. When the gear position GP is changed, the throttle opening degree TP is temporarily decreased significantly, and the engine rotation speed ES is temporarily decreased after being gradually increased. When the gear position GP is changed, the output signal of the downstream oxygen concentration sensor 123 varies and the Mahalanobis' distance is significantly larger than 1. The third graph from the left end indicates a case where the throttle valve is closed and the vehicle 100 decelerates. When the throttle valve is closed, the output signal of the downstream oxygen concentration sensor 123 varies and the Mahalanobis' distance is significantly larger than 1. In the fourth graph from the left end, steady-state driving in which the driving state of the vehicle 100 scarcely changes is performed, but the Mahalanobis' distance is significantly larger than 1 because the output signal of the downstream oxygen concentration sensor 123 does not change at all. The pattern shown in the fourth graph from the left end seldom occurs. However, in order to accurately diagnose the deterioration state of the catalyst 121 even if such a pattern occurs, the state recognition device 1 may diagnose the deterioration state of the catalyst 121 by utilizing the Mahalanobis' distances in plural identification periods Td. In other words, when diagnosis results regarding the identification period Td in a predetermined number or more identification periods Td indicate that the catalyst 121 is deteriorated, the state recognition device 1 may diagnose that the catalyst 121 is deteriorated. Meanwhile, when the driving state of the vehicle 100 is significantly varied even though the catalyst 121 is normal as shown in the second and third graphs from the left end, the output signal of the downstream oxygen concentration sensor 123 is significantly varied and the Mahalanobis' distance becomes a lot larger than 1. On this account, the state recognition device 1 may perform the diagnosis only when the driving state of the vehicle 100 does not significantly change.

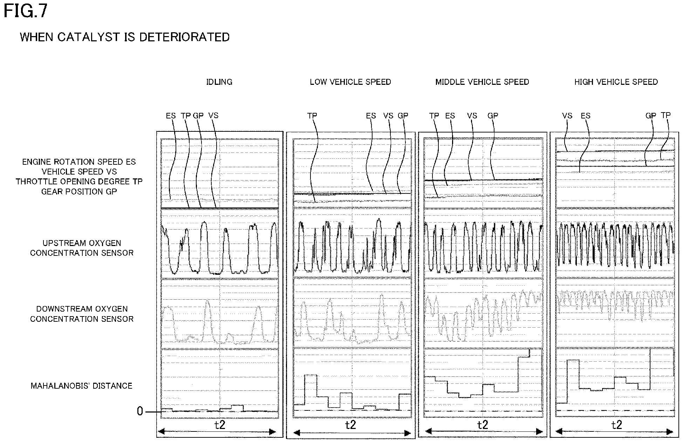

FIG. 6(a) is a graph when the catalyst 121 is deteriorated. FIG. 6(b) is a histogram of the Mahalanobis' distance shown in FIG. 6(a). As shown in FIG. 6(b), most of the Mahalanobis' distances in one driving cycle shown in FIG. 6(a) are values equal to or more than 10. FIG. 7 shows graphs in which four parts of the graphs in FIG. 6(a) are enlarged. It is noted that the maximum value on the vertical axis showing the Mahalanobis' distance in FIG. 7 is 180. The lengths t2 of time in the respective four graphs in FIG. 7 are identical with each other. Each length t2 is several times as long as the identification period Td and is longer than the time t1.

The four graphs in FIG. 7 are graphs when the driving state of the vehicle 100 satisfies a condition in which the state recognition device 1 is able to diagnose the deterioration state of the catalyst 121. All of the four graphs show steady-state driving in which the driving state of the vehicle 100 scarcely changes. In the leftmost graph among the four graphs, the vehicle speed VS is zero, the engine rotation speed ES is equal to an idling rotation speed, and an average of the Mahalanobis' distances is 5. When the average of the Mahalanobis' distances is 5, because this value is significantly larger than 1 that is a value when the catalyst 121 is normal, the state recognition device 1 is able to diagnose the deterioration state of the catalyst 121 even though the engine rotation speed ES is at the idling rotation speed. In the second graph from the left, the vehicle speed VS is at a value within a low vehicle speed range, and an average of the Mahalanobis' distances is 29. In the third graph from the left, the vehicle speed VS is at a value within a middle vehicle speed range that is higher than the low vehicle speed range, and an average of the Mahalanobis' distances is 90. In the fourth graph from the left, the vehicle speed VS is at a value within a high vehicle speed range that is higher than the middle vehicle speed range, and an average of the Mahalanobis' distances is 117. In this way, the higher the vehicle speed VS is, the larger the value of the Mahalanobis' distance is. As described above, in the specific example, the length of the identification period Td is constant regardless of the length of the cycle of reversal between increasing and decreasing tendencies of the fuel amount. On this account, the higher the vehicle speed VS is, the larger the number of times of reversal between increasing and decreasing tendencies of the fuel amount during the identification period Td is. Due to this, the diagnosis accuracy is improved.

### <Fourth Embodiment>

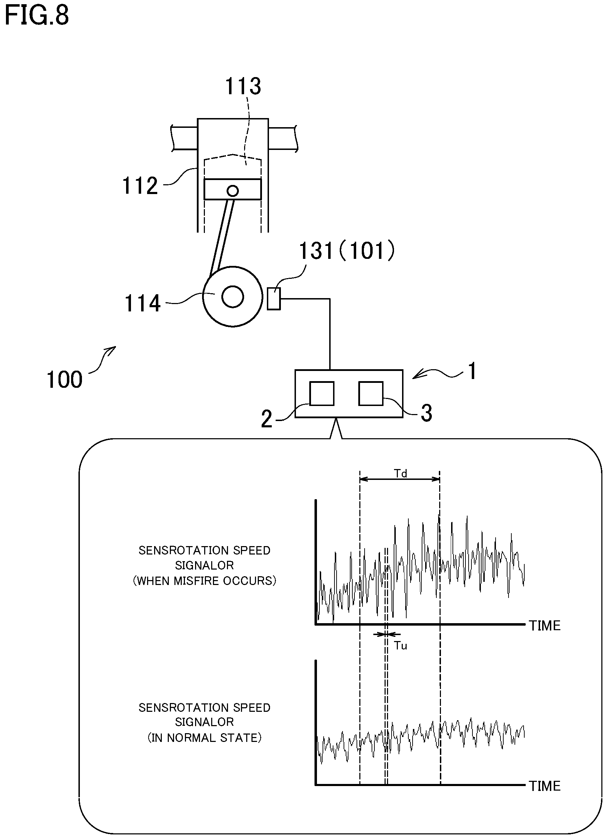

The following will describe a state recognition device 1 of the Fourth Embodiment of the present teaching with reference to FIG. 8. The Fourth Embodiment encompasses the features of the First Embodiment. The state recognition device 1 of the Fourth Embodiment is an example in which a state recognition device of the present teaching is applied to a misfire diagnosis device that is configured to output an identification signal by which the occurrence of misfire of the engine is identified. It is noted that the example of applying the state recognition device of the present teaching to the misfire diagnosis device is not limited to the Fourth Embodiment.

In the Fourth Embodiment, a vehicle 100 includes an engine 112 and an engine rotation speed sensor 131. The engine rotation speed sensor 131 is equivalent to an example of the sensor 101 of the First Embodiment. The engine 112 includes a combustion chamber 113. While the reference signs of the engine 112 and the combustion chamber 113 are identical with the reference numbers in the Third Embodiment, the Fourth Embodiment may or may not have the same features as those of the Third Embodiment. The engine 112 includes a crankshaft 114. The power of the engine 112 is output from the crankshaft 114. The engine rotation speed sensor 131 is configured to detect the rotation speed of the crankshaft 114, i.e., the engine rotation speed. The output signal of the engine rotation speed sensor 131 is not a continuous vibration signal but a pulse signal. The processor 2 generates a rotation speed signal indicating a change of the rotation speed of the engine 112, from the output signal of the engine rotation speed sensor 131. The rotation speed signal is equivalent to an example of the predetermined signal in the First Embodiment. FIG. 8 shows an example of changes of the rotation speed signal when misfire occurs, and an example of changes of the rotation speed signal when no misfire occurs.

Irrespective of the occurrence of misfire, the rotation speed signal is a continuous vibration signal that vibrates in accordance with a timing of a specific process (e.g., a combustion process) in one cycle of the engine 112. Irrespective of the occurrence of misfire, when at least one of the driving environment or the driving state has changed, the center of vibration of the rotation speed signal (continuous vibration signal) may change due to the change of the at least one of the driving environment or the driving state. For example, when an amount of air supplied to the combustion chamber 113 increases and the vehicle speed increases, the center of vibration of the continuous vibration signal increases. Irrespective of the occurrence of misfire, when at least one of the driving environment or the driving state has changed, the amplitude of vibration of the rotation speed signal (continuous vibration signal) may change due to the change of the at least one of the driving environment or the driving state. Irrespective of the occurrence of misfire, when at least one of the driving environment or the driving state has changed, the cycle of vibration of the rotation speed signal (continuous vibration signal) may be disturbed due to the change of the at least one of the driving environment or the driving state. The amplitude of vibration of the rotation speed signal (continuous vibration signal) when misfire (in particular, intermittent misfire) occurs is larger than the amplitude of vibration of the rotation speed signal (continuous vibration signal) when no misfire occurs.

In the Fourth Embodiment, in the step S12, the external processing device calculates a unit space by means of the MT method, based on sets of data per unit period Tu of the rotation speed signal (continuous vibration signal), which are obtained in the identification period Td, the rotation speed signal being a signal in which signal disturbance that is at least one of a change of the center of vibration, a change of the amplitude of vibration, or disturbance of the cycle of vibration occurs on account of a change of at least one of the driving environment or the driving state. The unit space calculated in the step S12 in the Fourth Embodiment functions as a reference for identifying whether misfire occurs in the engine 112. In the step S13, the external processing device generates a program for executing the identification signal output process, which includes a Mahalanobis' distance output program corresponding to the calculated unit space, and stores the generated program in the storage device 3 of the state recognition device 1. In this way, the state recognition device 1 is produced in the Fourth Embodiment.

In the step S2 of the identification signal output process, by reading the Mahalanobis' distance output program stored in the storage device 3 and executing the process, the processor 2 of the state recognition device 1 outputs the Mahalanobis' distance on which a characteristic amount regarding a change of the continuous vibration signal in which signal disturbance occurs is reflected, by using the Mahalanobis' distance output unit generated based on the unit space calculated by means of the MT method, based on sets of data per unit period Tu of the rotation speed signal (continuous vibration signal) in which signal disturbance occurs in the identification period Td. In the step S3, an identification signal, which identifies whether a misfire occurs in the engine 112, is output based on the Mahalanobis' distance. The length of the identification period Td may be set regardless of the length of the cycle of the engine rotation speed, or may be set in accordance with the engine rotation speed. The identification period Td may be, for example, a period of about one second. The unit period Tu may be a duration of about 10 to 100 milliseconds, for example. The state recognition device 1 of the Fourth Embodiment particularly outputs an identification signal, which identifies whether intermittent misfire occurs in the engine 112. There are several types of misfire of the engine, e.g., intermittent misfire and continuous misfire. The intermittent misfire indicates that misfire sporadically occurs in such a way that, for example, misfire intermittently occurs in one cylinder of the engine, or the cylinder where misfire occurs is switched between plural cylinders over time. The continuous misfire indicates that misfire always occurs in one cylinder of the engine.

In the Fourth Embodiment, in the step S12, the external processing device may calculate a unit space based on data of the rotation speed signal when intermittent misfire occurs. In the step S2 of the identification signal output process, the Mahalanobis' distance may be output by using the Mahalanobis' distance output unit generated based on the unit space calculated based on the data of the rotation speed signal when intermittent misfire occurs. In the Fourth Embodiment, a state in which intermittent misfire occurs corresponds to an example of the predetermined state in the First Embodiment, and a state in which no intermittent misfire occurs corresponds to an example of the state different from the predetermined state in the First Embodiment.

The Fourth Embodiment may or may not include the features of the Second Embodiment. When the Fourth Embodiment includes the features of the Second Embodiment, for example, a wheel speed sensor included in the vehicle 100 and configured to detect the rotation speed of a wheel may be equivalent to an example of the different sensor 102 of the Second Embodiment. When the Fourth Embodiment includes the features of the Second Embodiment, for example, a throttle sensor configured to detect the opening degree of a throttle valve for adjusting an amount of air supplied to a combustion chamber 113 may be equivalent to an example of the different sensor 102 of the Second Embodiment.

The processor 2 of the state recognition device 1 of the Fourth Embodiment may be configured to execute, in addition to the identification signal output process of the present teaching, an identification signal output process of outputting an identification signal, which identifies whether a misfire occurs in the engine 112, which is different from the identification signal output process of the present teaching.

### [Reference Signs List]

1: state recognition device, 2: processor, 100: vehicle, 101, 123, 131: sensor, 102: different sensor

## Claims

1. A method for producing a state recognition device which is configured to output an identification signal for controlling the vehicle, for providing a notification to a user, or for collecting data regarding the vehicle, the identification signal identifying whether a state of a vehicle or a state of part of the vehicle is a predetermined state or a state other than the predetermined state, based on either an output signal of a sensor mounted on the vehicle whose driving environment and driving state vary or a predetermined signal generated from the output signal of the sensor, the output signal of the sensor or the predetermined signal being a continuous vibration signal that vibrates at least in a steady state where at least the driving environment and the driving state of the vehicle stay unchanged, and the method comprising:
a unit space calculation step of calculating a unit space, which functions as a reference for identifying whether the state of the vehicle or the state of part of the vehicle is the predetermined state or the state other than the predetermined state, by means of a Mahalanobis-Taguchi, MT, method, based on sets of data per unit period of a continuous vibration signal in which a signal disturbance is occurring, which are less susceptible to a variation including both increase and decrease and are obtained in an identification period, the identification period being as long as or longer than a half of one cycle when a cycle of vibration of the continuous vibration signal is undisturbed and is arranged so that one driving cycle includes plural identification periods, the data of the continuous vibration signal being data when the signal disturbance, which is at least one of a change of the center of vibration, a change of amplitude of vibration, or disturbance of the cycle of vibration, is occurring in the continuous vibration signal due to a change of at least one of the driving environment or the driving state of the vehicle; and
a Mahalanobis' distance output unit generation step of generating, based on the calculated unit space, a Mahalanobis' distance output unit which is included in the state recognition device and is configured to output a Mahalanobis' distance.

2. The method for producing the state recognition device according to claim 1, wherein, in the Mahalanobis' distance output unit generation step, the Mahalanobis' distance output unit is produced without using a signal level.

3. The method for producing the state recognition device according to claim 1, wherein, in the unit space calculation step, a single unit space is calculated.

4. The method for producing the state recognition device according to any one of claims 1 to 3, wherein, in the unit space calculation step, in the identification period the unit space is calculated by using the MT method based on the data per unit period of the continuous vibration signal in which the signal disturbance occurs and data of a signal output from at least one different sensor mounted on the vehicle.

5. The method for producing the state recognition device according to any one of claims 1 to 4, wherein, in the unit space calculation step, the unit space is calculated by using the MT method based on either data of the continuous vibration signal when the state of the vehicle or the state of part of the vehicle is the predetermined state or data of the continuous vibration signal when the state of the vehicle or the state of part of the vehicle is the state other than the predetermined state.

6. The method for producing the state recognition device according to any one of claims 1 to 5, wherein,
the vehicle includes an engine and a catalyst configured to purify exhaust gas exhausted from the engine, and
in the unit space calculation step, the unit space is calculated, by using the MT method, as a reference for identifying whether the catalyst is normal or deteriorated.

7. The method for producing the state recognition device according to any one of claims 1 to 6, wherein,
the vehicle includes an engine, and
in the unit space calculation step, the unit space is calculated, by using the MT method, as a reference for identifying whether a misfire occurs in the engine or the engine runs without a misfire .

8. A state recognition device which is configured to output an identification signal for controlling the vehicle, for providing a notification to a user, or for collecting data regarding the vehicle, the identification signal identifying whether a state of a vehicle or a state of part of the vehicle is a predetermined state or a state other than the predetermine state based on either an output signal of a sensor mounted on the vehicle whose driving environment and driving state vary or a predetermined signal generated from the output signal of the sensor, the output signal of the sensor or the predetermined signal being a continuous vibration signal that vibrates at least in a steady state where at least the driving environment and the driving state of the vehicle stay unchanged, and the state recognition device comprising:
a processor which is configured to execute at least an identification signal output process of
(i) outputting a Mahalanobis' distance, on which a characteristic amount regarding a change of the continuous vibration signal in which a signal disturbance is occurring is reflected, by means of a Mahalanobis' distance output unit generated based on a unit space calculated by means of a Mahalanobis-Taguchi, MT, method, based on sets of data per unit period of the continuous vibration signal in which the signal disturbance is occurring, which are less susceptible to a variation including both increase and decrease and are obtained in an identification period, the identification period being as long as or longer than a half of one cycle when a cycle of vibration of the continuous vibration signal is undisturbed and is arranged so that one driving cycle includes plural identification periods, and
(ii) outputting the identification signal identifying whether the state of the vehicle or the state of part of the vehicle is the predetermined state or the state other than the predetermine state, based on the Mahalanobis' distance, when the signal disturbance, which is at least one of a change of the center of vibration, a change of amplitude of vibration, or disturbance of the cycle of vibration, is occurring in the continuous vibration signal due to a change of at least one of the driving environment or the driving state of the vehicle.

9. The state recognition device according to claim 8, wherein, in the identification signal output process, the processor
outputs a Mahalanobis' distance, on which a characteristic amount regarding a change of the continuous vibration signal in which the signal disturbance is occurring is reflected, by means of a Mahalanobis' distance output unit generated based on the unit space calculated by means of the MT method, based on data per unit period of the continuous vibration signal in which the signal disturbance is occurring and data of a signal output from at least one different sensor mounted on the vehicle in the identification period, and
outputs the identification signal identifying whether the state of the vehicle or the state of part of the vehicle is the predetermined state or the state other than the predetermined state based on the Mahalanobis' distance, when the signal disturbance is occurring in the continuous vibration signal due to a change of at least one of the driving environment or the driving state of the vehicle.

10. The state recognition device according to claim 8 or 9, wherein, in the identification signal output process, the processor outputs a Mahalanobis' distance by using a Mahalanobis' distance output unit that is generated based on the unit space calculated by using the MT method either based on data of the continuous vibration signal when the state of the vehicle or the state of part of the vehicle is the predetermined state or based on data of the continuous vibration signal when the state of the vehicle or the state of part of the vehicle is the state other than the predetermined state.

11. The state recognition device according to any one of claims 8 to 10, wherein
the vehicle includes an engine and a catalyst configured to purify exhaust gas exhausted from the engine, and
the identification signal includes a signal for identifying whether the catalyst is normal or deteriorated.

12. The state recognition device according to any one of claims 8 to 11, wherein,
the vehicle includes an engine, and
the identification signal includes a signal for identifying whether a misfire occurs in the engine or the engine runs without a misfire.
